# EUROPEAN PATENT APPLICATION

(11) **EP 3 357 861 A1**
(43) Date of publication of application: **08.08.2018**
(21) Application number: 18153219.3
(22) Date of filing: 24.01.2018
(51) Int. Cl.: B68C 1/00, B68C 1/12, B68F 3/00

(54) **MEASURING DEVICE FOR INDIVIDUALIZED FITTING OF THE SHAPE OF THE PADDING OF A SADDLE FOR A HORSE**

(30) Priority: 01.02.2017 FI U20174025 U
(71) Applicant: GRÖNBERG, Pauli, 04300 Tuusula (FI)
(72) Inventor: GRÖNBERG, Pauli, 04300 Tuusula (FI)
(74) Representative: Heinänen Oy Patent Agency

(57) **Abstract**

Measuring device (1) for fitting the shape of the softener of a saddle for a horse individually for each horse, which measuring device (1) comprises sensors (2) installed in its base, the sensors measuring distance, and which device has a front part (E) and a rear part (T). The invention is implemented in such a way that adjustment mechanisms are installed on the front part (E) and on the rear part (T) of the measuring device (1) for adjusting the vertical distance of the measuring device (1) in relation to the horse.

## Description

The object of the present invention is a measuring device for the individualized fitting of the shape of the softener of a saddle for a horse, which measuring device comprises sensors installed in its base, the sensors measuring distance, and which device has a front part and a rear part.

The various items of horse tack, such as a saddle, cause discomfort, and even pain, to a horse if they do not fit the horse properly. Each horse is individual and therefore saddles should be made for each horse individually, following the contours of the back of the horse in question. This can be done by shaping for each horse individually the softener part to be fastened to the bottom surface of the saddle frame. Some methods for implementing this are known in the art.

Finnish patent 90649 discloses a method for fitting the saddle for a horse to the back of a horse, in which method softeners following the shape of the horse's back and essentially retaining their shape are cast, or brought about in a corresponding manner, between the saddle frame and the horse's back in conjunction with installing the saddle. Before the casting, pressurizable adaptor pieces and a casting mold are placed between the saddle frame and back. After that, the adaptor pieces are partially pressurized, the girth straps of the saddle are tightened and the pressure of the adaptor pieces is increased in such a way that the saddle comes into the correct position by means of the adaptor pieces and to an adequate tightness corresponding essentially to the weight of a rider, after which the molds are filled with an elastically flexible material, e.g. foam plastic, cellular rubber or corresponding. The method is suited to fitting the saddle of a horse, but has rather many phases and is laborious.

Publication EP 0987216 B1 presents a method and a measuring device for forming the saddle of a horse suitably to the shape of the horse. In it, the frame part of the saddle, in which part holes are formed, is placed into position on the back of the horse, and the distance of the frame part from the skin of the animal is measured through the holes with a digital distance gauge. These measurement data are fed into a computer and an automatic milling machine is controlled by means of the computer, by means of which the softener part is milled correspondingly to the measurement data, and finally the softener part is fastened to the inside surface of the frame part of the saddle.

The method described above is effective. It is, however, ergonomically important for the rider that the saddle is in as correct a position as possible on the back of the horse. What is important is that the saddle is not inclined in the sideways direction or in the longitudinal direction. Therefore, it is also important to get the measuring device into as correct a position as possible before the measurement.

The aim of the present invention is to provide a new type of measuring device, by means of which a saddle that is as suitable as possible for both the horse and the rider can be fabricated. The measuring device according to the invention is characterized in that adjustment mechanisms are installed on the front part and on the rear part of the measuring device for adjusting the vertical distance of the measuring device in relation to the horse.

One preferred embodiment of the measuring device according to the invention is characterized in that the adjustment mechanism of the front part comprises an adjusting knob, an adjusting rod connected to it, and a gear transmission, by means of which the height direction of the support to be placed against the horse is adjustable.

Another preferred embodiment of the measuring device according to the invention is characterized in that the gear transmission comprises a gear wheel installed on an adjusting rod, and a vertical toothed rack in connection with said gear wheel.

Yet another preferred embodiment of the measuring device according to the invention is characterized in that the support is fork-shaped and it is connected to the toothed rack.

Yet another preferred embodiment of the measuring device according to the invention is characterized in that a vertical movement limiter is installed on the top part of the toothed rack.

Yet another preferred embodiment of the measuring device according to the invention is characterized in that the adjustment mechanism of the rear part comprises an adjusting knob, an adjusting rod connected to it, and gear transmissions, by means of which the height direction of the feet to be placed against the horse are adjustable.

Yet another preferred embodiment of the measuring device according to the invention is characterized in that the gear transmissions comprise two gear wheels and the vertical toothed racks in connection with them.

Yet another preferred embodiment of the measuring device according to the invention is characterized in that vertical movement limiters are installed on the top parts of the toothed racks.

Yet another preferred embodiment of the measuring device according to the invention is characterized in that a spirit-level indicating the horizontality in the transverse direction of the measuring device as well as a spirit-level indicating the horizontality in the longitudinal direction of the measuring device are installed on the measuring device.

Some of the advantages of the invention that can be mentioned are that the measuring device can be installed into precisely the correct position before starting the measurement. In addition, the measuring device remains firmly in the adjusted position and does not sway or move out of position.

In the following, the invention will be described in more detail by the aid of some preferred embodiments with reference to the attached drawings, wherein
Fig. 1 presents a measuring device according to the invention as viewed obliquely from the front.
Fig. 2 presents and highlights the front adjustment mechanism of the measuring device.
Fig. 3 presents and highlights the rear adjustment mechanism of the measuring device.

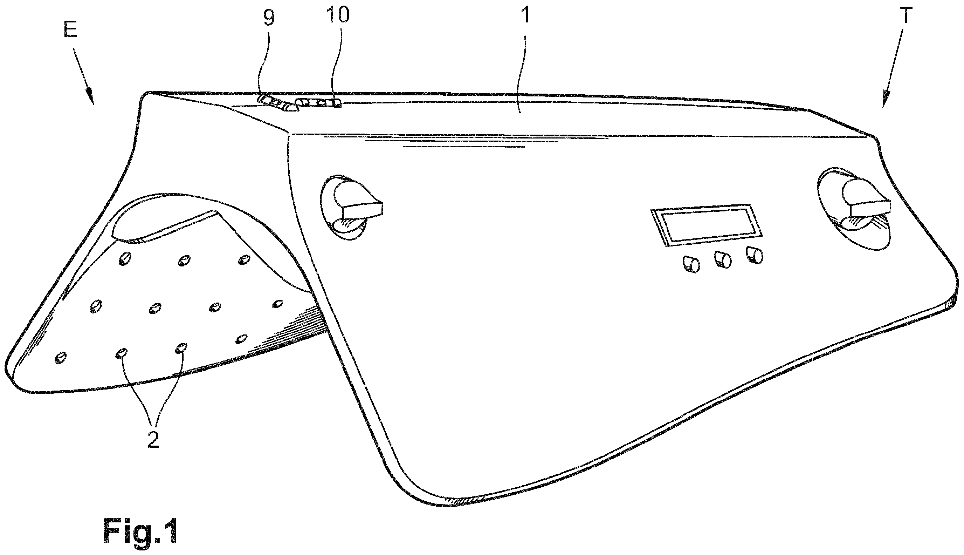

Fig. 1 thus presents a measuring device 1 according to the invention. The front part of the measuring device is presented with the arrow E and the rear part of the measuring device with the arrow T. The measuring device is situated on the back of the horse in such a way that the front part E comes closer to the head of the horse and, correspondingly, the rear part T closer to the tail of the horse.

Marked with the reference number 2 are sensors, of which there are tens on the inside surface of the measuring device, i.e. on the surface that points towards the back of the horse. During the measurement, the sensors measure the distance to the skin of the horse and transmit information to a computer, which in turn controls a milling machine, with which the softener to be fixed to the saddle frame is milled. In this way, the saddle is made to precisely follow the contours of the horse's back.

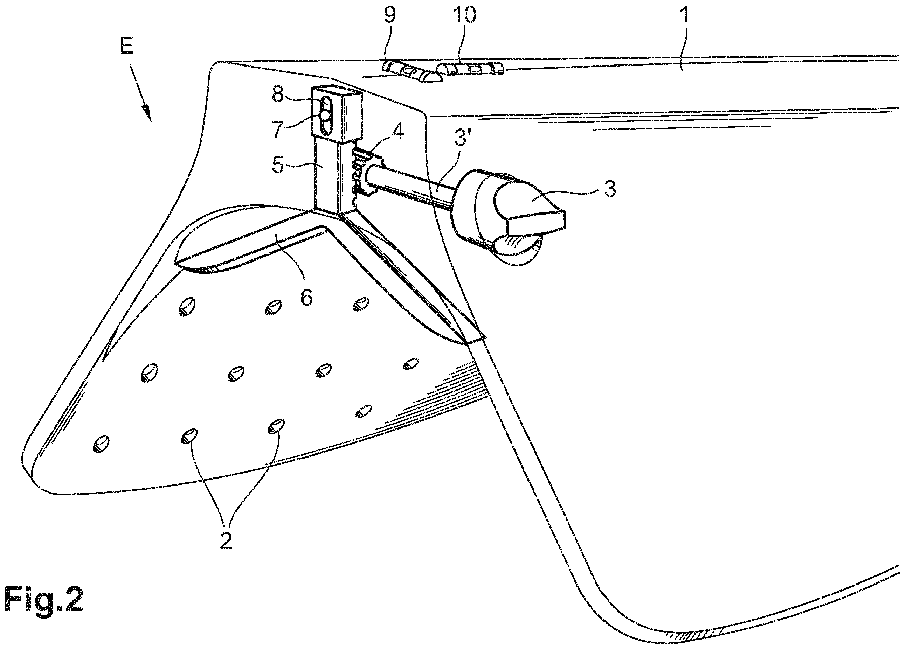

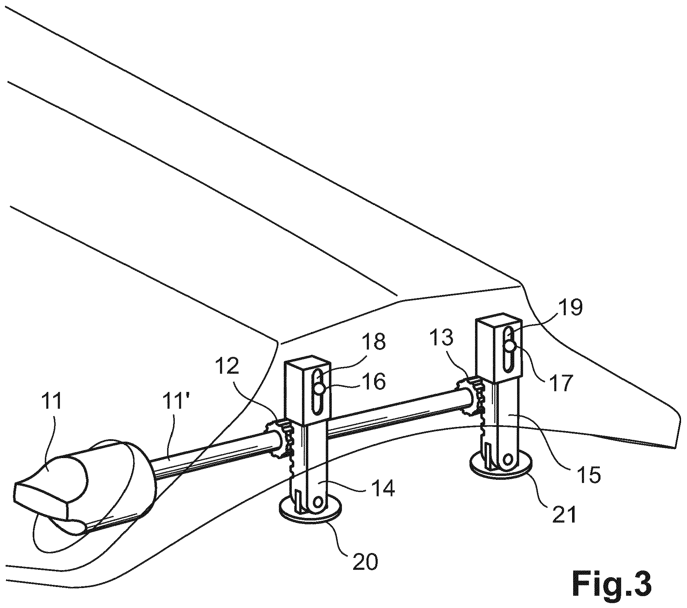

This invention relates more particularly to the adjustment mechanism disposed in the front part E of the measuring device as well as to the adjustment mechanism disposed in the rear part T of the measuring device. These are presented in more detail in Figs. 2 and 3.

Fig. 2 presents an adjustment mechanism for the front part. It comprises an adjusting knob 3, by means of which the adjusting rod 3' is rotated and thereby the gear wheel 4, which via the gear transmission in turn moves the toothed rack 5 in the vertical direction. Fastened to the toothed rack is a fork-shaped support 6, which settles against the horse's back. In this way, the height of the front part E of the measuring device can be adjusted in relation to the horse's back. A movement limiter pin 7 according to Fig. 2 can be installed on the top end of the toothed rack 5, which pin is able to move to the extent of the height of the groove 8.

Two spirit-levels 9 and 10 are installed on top of the measuring device. The spirit-level 9 indicates the horizontality of the measuring device in the transverse direction and the spirit-level 10 in the longitudinal direction of the measuring device. The objective is to get both spirit-levels to be horizontal. The measuring device is then in the optimal position. Transverse horizontality is set by hand without adjusting devices. Instead, the front and back adjustment mechanisms act on longitudinal horizontality.

The adjustment mechanism (Fig. 3) of the rear part T comprises an adjusting knob 11, by means of which the adjusting rod 11' is rotated and thereby also the gear wheels 12 and 13. The gear wheels 12 and 13 in turn move the toothed racks 14 and 15 in the vertical direction. On the bottom ends of the toothed racks are feet 20 and 21, which settle against the horse's back. Limiter pins 16 and 17 for vertical movement according to Fig. 3 can be installed on the top ends of the toothed racks 14 and 15, the pins being able to move by the extent of the height of the grooves 18 and 19.

The measuring device can thus be made to settle to be horizontal in its longitudinal direction by turning the knobs 3 and 11 until the bubble of the spirit-level 10 indicating longitudinal horizontality is in position.

It is obvious to the person skilled in the art that the invention is not limited to the embodiments presented above, but that it can be varied within the scope of the claims presented below.

The characteristic features possibly presented in the description in conjunction with other characteristic features can if necessary be used separately to each other.

## Claims

1. Measuring device (1) for fitting the shape of the softener of a saddle for a horse individually for each horse, which measuring device (1) comprises sensors (2) installed in its base, the sensors measuring distance, and which device has a front part (E) and a rear part (T), **characterized in that** adjustment mechanisms are installed on the front part (E) and on the rear part (T) of the measuring device (1) for adjusting the vertical distance of the measuring device (1) in relation to the horse.

2. Measuring device according to claim 1, **characterized in that** the adjustment mechanism of the front part (E) comprises an adjusting knob (3), an adjusting rod (3') connected to it, and a gear transmission (4, 5), by means of which the height direction of the support (6) to be placed against the horse is adjustable.

3. Measuring device according to claim 2, **characterized in that** the gear transmission (4, 5) comprises a gear wheel (4) installed on an adjusting rod (3'), and a vertical toothed rack (5) in connection with said gear wheel.

4. Measuring device according to claim 2 or 3, **characterized in that** the support (6) is fork-shaped and it is connected to the toothed rack (5).

5. Measuring device according to claim 3 or 4, **characterized in that** a vertical movement limiter (7, 8) is installed on the top part of the toothed rack (5).

6. Measuring device according to claim 1, **characterized in that** the adjustment mechanism of the rear part (T) comprises an adjusting knob (11), an adjusting rod (11') connected to it, and gear transmissions (12, 14; 13, 15), by means of which the height direction of the feet (20, 21) to be placed against the horse is adjustable.

7. Measuring device according to claim 6, **characterized in that** the gear transmissions (12, 14; 13, 15) comprise two gear wheels (12, 13) and the vertical toothed racks (14, 15) in connection with them.

8. Measuring device according to claim 7, **characterized in that** vertical movement limiters (16, 18; 17, 19) are installed on the top parts of the toothed racks (14, 15).

9. Measuring device according to any of claims 1-8, **characterized in that** a spirit-level (9) indicating the horizontality in the transverse direction of the measuring device as well as a spirit-level (10) indicating the horizontality in the longitudinal direction of the measuring device are installed on the measuring device (1).
